# EUROPEAN PATENT SPECIFICATION

(11) **EP 0 879 345 B1**
(45) Date of publication and mention of the grant of the patent: **02.05.2002**
(21) Application number: 97902814.9
(22) Date of filing: 05.02.1997
(51) Int. Cl.: F02B 37/04

(54) **SUPERCHARGED INTERNAL COMBUSTION ENGINE**
AUFGELADENE KOLBENBRENNKRAFTMASCHINE
MOTEUR A COMBUSTION INTERNE SURALIMENTE

(30) Priority: 05.02.1996 SE 9600415
(43) Date of publication of application: 25.11.1998
(73) Proprietor: AB VOLVO, 405 08 Göteborg (SE)
(72) Inventor: GOBERT, Ulrich, S-425 32 Hisings Kärra (SE)
(74) Representative: Hellbom, Lars Olof
(86) International application number: SE9700171
(87) International publication number: WO9728361

(56) References cited:
- DE-C- 3 636 642
- DE-C- 3 710 195
- GB-A- 2 182 391
- US-A- 4 708 119
- PATENT ABSTRACTS OF JAPAN, Vol. 11, No. 368, M-647; & JP,A,62 142 824 (TOYOTA MOTOR CORP), 26 June 1987.

## Description

The present invention relates to a supercharged internal combustion engine, e.g. comprising an exhaust-driven turbocompressor and a mechanically engine-driven compressor, the pressure side of which is connected to the suction side of the turbocompressor, an engageable and disengageable clutch disposed between the engine and the mechanical compressor and engine speed responsive means which are disposed to keep the clutch engaged within a predetermined engine speed interval, according to claim 1, first part (DE-A-3 710 195).

It is known to compensate the relatively poor charge pressure of a turbocompressor at low rpm with a mechanical compressor which is coupled in series with the turbocompressor in the manner described above. The mechanical compressor is used in various known ways. One known way is to allow the mechanical compressor to be driven permanently by the engine and to use valve means permitting the turbocompressor to suck air directly from the surrounding atmosphere when its air requirement on the suction side exceeds the capacity of the mechanical compressor. The air from the mechanical compressor can then be used for other purposes, for example, it can be conducted, in a known manner, to a charge air cooler to cool the charge air from the turbocompressor. In another known design, said valve means are coordinated with means for controlling a clutch between the engine and the mechanical compressor, said means releasing the clutch when the turbocompressor completely takes over the charging. It is also known to control a mechanical compressor solely as a function of engine speed and to allow the engine to drive the compressor from engine start-up to a maximum rpm, at which the turbocompressor charge pressure is sufficient, as determined by experience, at which time the mechanical compressor clutch is released.

In all of the above described known engine installations, the mechanical compressor will be engaged during operating conditions of the engine where it would be desirable to have it disengaged to eliminate the noise generated by the mechanical compressor, noise which cannot be avoided when it is operating and which is louder when the engine is unloaded than when it is loaded. If a vehicle is driven at a speed at which the engine has an rpm at which the mechanical compressor is disengaged and the driver lifts his foot from the accelerator to engine brake, in the last known example described above, the compressor will be engaged when the rpm drops to the above-mentioned upper rpm, e.g. 1500 rpm, and this is regarded by the driver and others as a definite disturbance.

The purpose of the present invention is to achieve a turbo-charged internal combustion engine of the type described by way of introduction, the rpm responsive means for engaging and disengaging the clutch being disposed to keep the clutch disengaged when the engine operating state is such that there is no need for extra supercharging from the mechanical compressor, i.e. during engine braking or when driving at low engine speed and low load.

This is achieved according to the invention by virtue of the features according to claim 1.

An indirect measure of the load can be obtained from the accelerator position and in a simple embodiment of the invention, the engine accelerator is coordinated with a switch in a current circuit to an electromagnetic clutch. When the driver lifts his foot from the accelerator, for example to engine brake, the switch breaks the current so that the compressor will remain disengaged even when the engine speed drops into the interval within which the compressor is normally engaged when the engine is loaded. In this manner undesirable engagement of the compressor is avoided. When the driver once again wishes to provide more fuel and depresses the accelerator, the switch will again provide current to the clutch which - if the engine speed is within the above mentioned interval - will engage the compressor.

In a further development of the engine according to the invention, the rpm responsive control means cooperate with temperature-sensitive means disposed to rescind the blocking function of the load-sensitive means when the engine temperature is lower than a predetermined level. By rescinding the blocking function when the engine is cold, the compressor can be kept engaged within its normal rpm range, which provides much more rapid heating up of the engine and thus lower emissions.

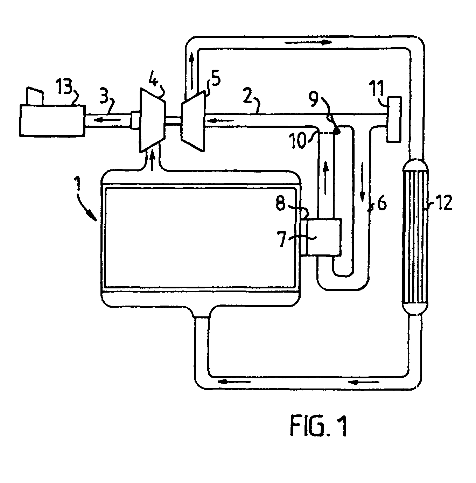

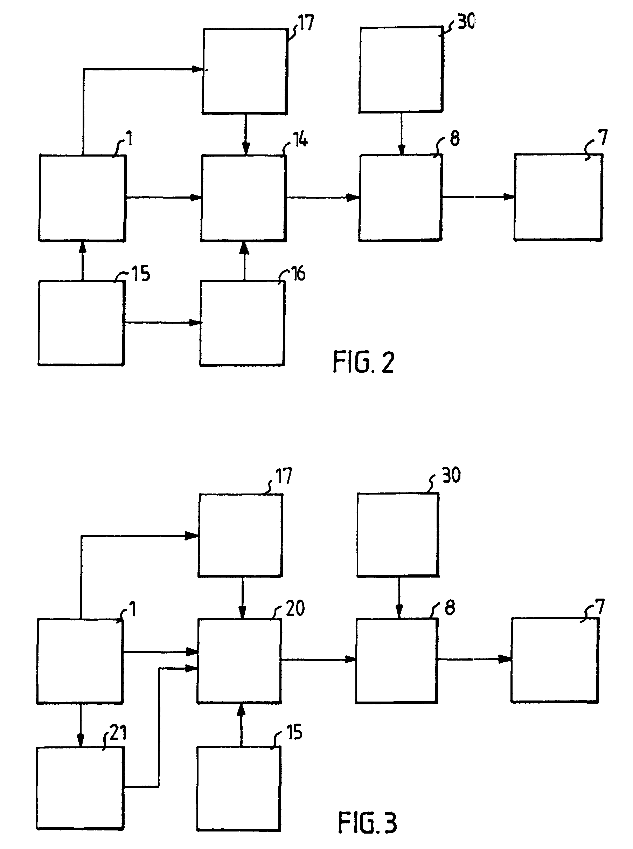

The invention will be described in more detail with reference to examples shown in the accompanying drawing, where Fig. 1 shows schematically a four-stroke diesel engine according to the invention, Fig. 2 shows a block diagram of a first embodiment of a control system for the clutch of the mechanical compressor, and Fig. 3 shows a block diagram corresponding to Fig. 2, of a second embodiment.

In Fig. 1, the numeral 1 generally designates an internal combustion engine of diesel type with an intake conduit 2 and an exhaust conduit 3. A turbocompressor consisting of a turbine portion 4 and a compressor portion 5 is disposed, in a conventional manner, in the intake conduit 2 and the exhaust conduit 3. In a conduit 6 branched from the intake conduit 2 there is a mechanically driven compressor 7 with its pressure side communicating with the suction side of the turbocompressor 5. The compressor 7 can be of any known displacement type, e.g. a screw compressor. It is driven directly by the engine crankshaft, for example, via a schematically indicated electromagnetic clutch 8. A check valve 9 is arranged in the branch 10 between the intake conduit 2 and the conduit 6 and, in the example shown, is of the flap valve type. In Fig.1, the numeral 11 indicates an intake air filter, the numeral 12 a charge air cooler and the numeral 13 a muffler.

In Fig. 2, components having counterparts in Fig. 1 have been given the same reference numerals as in Fig. 1.

Engagement and disengagement of the electromagnetic clutch is controlled by a switch 14 in the electrical circuit to the clutch, said switch 14 being actuated by the engine speed and being disposable to close the circuit for engaging the clutch at ca 300 rpm and breaking the current to disengage the clutch at ca 1500 rpm. In the electrical circuit to the electromagnetic clutch 8 there is also a switch 16 coupled to the engine accelerator 15.

The accelerator 15 is spring-biased in a conventional manner towards an idle position and in this position, which the accelerator pedal assumes when it is unloaded, the switch 16 breaks the current to the rpm responsive switch 14 to keep the clutch 8 disengaged, so that the mechanical compressor will not be driven even if the engine speed should lie within the interval given above. This means that the mechanical compressor 7 will not be engaged during motorbraking, for example, when the driver lifts his foot from the accelerator pedal and the rpm drops to within the stated interval where the compressor 7 would have been engaged if the engine were loaded.

The rpm responsive switch 14 is coordinated with an engine temperature sensor 17 in such a manner that the clutch 8 is supplied with current and is turned on even when the switch 16 is turned off, if the engine temperature lies within a predetermined interval. This means that when the engine is cold, the mechanical compressor 8 is engaged at 300 rpm, i.e. as soon as the engine is started, and is kept engaged at idle rpm or slightly thereabove for heating the engine even if the engine is unloaded. This is accomplished not by pressing the accelerator pedal 15 but by adjusting a hand-throttle (not shown) to a low throttle setting. This function provides more rapid warming up of the engine and much lower exhaust emissions than if the mechanical compressor 7 were kept disengaged. When the engine temperature has reached a predetermined level, the current to the clutch 8 is broken if the engine is unloaded and the switch 16 is in the off-position.

In the embodiment in Fig. 3, the engine 1 has an electronic engine control unit 20, into which signals are fed, representing various engine and vehicle data, such as engine rpm, engine temperature, accelerator pedal position and vehicle speed. From a fuel flowmeter 21 a signal is fed representing the instantaneous fuel consumption, which is a direct measure of the engine load. The basic functioning of the embodiment in Fig. 3 corresponds to that shown in Fig. 2. At a certain predetermined low fuel flow, indicating low engine load, the control unit 20 keeps the clutch 8 disengaged provided the temperature signal from the engine indicates normal operating temperature. When the engine is cold, the temperature signal is given priority over the load signal and the clutch 8 is kept engaged from the rpm where the engine normally ignites (ca 300 rpm) to achieve more rapid heating up of the engine.

If the engine has a so-called exhaust brake (counterpressure in the exhaust pipe or decompression brake), the clutch can suitably be provided with a manual control 30, by means of which the clutch 8 can be engaged regardless of whether the engine load is so low that the accelerator-actuated switch 16 or the control unit 20 breaks the current to the clutch. This control can preferably be coordinated with those operating means which engage and disengage the exhaust brake. By engaging the compressor 7 during exhaust braking, the engine braking power is increased.

## Claims

1. Supercharged internal combustion engine, comprising an exhaust brake device, an exhaust-driven turbocompressor, a mechanically engine-driven compressor, the pressure side of which is connected to the suction side of the turbocompressor, an engageable and disengageable clutch disposed between the engine and the mechanical compressor, and engine speed responsive means, which are disposed to keep the clutch engaged within a predetermined engine speed interval, said engine speed responsive means (14;20) cooperating with means (15,16;21) which directly or indirectly sense the engine (1) load and block engagement of the clutch (8) when the engine load is less than a predetermined level, **characterized in that** means (30) are arranged which, when the exhaust brake device is actuated, permit engagement of the clutch (8) regardless of whether the load-sensing means (16,21) indicate that the load is less than said predetermined level.

2. Internal combustion engine according to Claim 1, **characterized in that** the engine speed responsive control means (14;20) cooperate with temperature-sensing means (17) which are disposed to rescind the blocking function of the load-sensing means (15,16;21) when the engine temperature is less than a predetermined level.

3. Internal combustion engine according to Claim 2, **characterized in that** the engine speed responsive control means (14;20) are arranged, when the engine speed is anywhere from zero up to a predetermined engine speed, to keep the clutch (8) disengaged regardless of the engine temperature.

4. Internal combustion engine according to one of Claims 1-3, **characterized in that** the means for load-sensing and blocking engagement of the clutch (8), comprise an accelerator (15) and a switch (16) controlled thereby in a current circuit to an electromagnetic clutch (8), said switch being arranged to break or connect the current in the circuit depending on a certain predetermined actuation of the accelerator (15).

5. Internal combustion engine according to Claim 4, **characterised in that** the accelerator is an accelerator pedal (15) spring-biased towards an idle position, and that the switch (16) is disposed to switch when the accelerator pedal is moved from a depressed position to an idle position.

6. Internal combustion engine according to Claim 1, **characterized in that** the means for sensing the engine load comprise a fuel flow meter (21) which is arranged to provide a signal representing the instantaneous fuel consumption to an electronic engine control unit (20).

7. Internal combustion engine according to Claim 2, **characterized in that** the temperature-sensing means (17) are arranged to provide a signal representing the engine temperature to an electronic engine control unit (20).

## Patentansprüche

1. Aufgeladener Verbrennungsmotor, der aufweist eine Abgasbremsvorrichtung, einen abgasgetriebenen Turbokompressor, einen mechanisch motorgetriebenen Kompressor, dessen Druckseite mit der Saugseite des Turbokompressors verbunden ist, eine in Eingriff bringbare und lösbare Kupplung, die zwischen dem Motor und dem mechanischen Kompressor angeordnet ist, und auf die Motordrehzahl reagierende Einrichtungen, die vorgesehen sind, um die Kupplung innerhalb eines vorbestimmten Drehzahlintervalls in Eingriff zu halten, wobei die auf die Motordrehzahl reagierenden Einrichtungen (14; 20) mit Einrichtungen (15, 16; 21) kooperieren, welche direkt oder indirekt die Belastung des Motors (1) erfassen und den Eingriff der Kupplung (8) blockieren, wenn die Motorbelastung geringer ist als ein vorbestimmtes Niveau, **dadurch gekennzeichnet, dass** Einrichtungen (30) angeordnet sind, die, wenn die Abgasbremsvorrichtung betätigt wird, ein Eingreifen der Kupplung (8) erlauben, ohne Berücksichtigung ob die belastungserfassenden Einrichtungen (16, 21) anzeigen, dass die Belastung geringer ist als das vorbestimmte Niveau.

2. Verbrennungsmotor nach Anspruch 1, **dadurch gekennzeichnet, dass** die auf die Motordrehzahl reagierenden Einrichtungen (14; 20) mit temperaturfühlenden Einrichtungen (17) kooperieren, die dazu vorgesehen sind, die Blockierfunktion der belastungserfassenden Einrichtungen (15, 16; 21) aufzuheben, wenn die Motortemperatur geringer ist als ein vorbestimmtes Niveau.

3. Verbrennungsmotor nach Anspruch 2, **dadurch gekennzeichnet, dass** die auf die Motordrehzahl reagierenden Einrichtungen (14; 20) angeordnet sind, um, wenn die Motordrehzahl irgendwo zwischen Null und einer vorbestimmten Drehzahl liegt, die Kupplung (8) ohne Rücksicht auf die Motortemperatur gelöst zu halten.

4. Verbrennungsmotor nach einem der Ansprüche 1 bis 3, **dadurch gekennzeichnet, dass** die Einrichtungen zum Belastungserfassen und zum Blockieren des Eingriffs der Kupplung (8) einen Beschleuniger (15) und einen Schalter (16) aufweisen, die in einem Stromkreis die elektromagnetische Kupplung (8) steuern, wobei der Schalter angeordnet ist, um den Strom in dem Kreis in Abhängigkeit von einer gewissen, vorbestimmten Betätigung des Beschleunigers (15) zu unterbrechen oder zu verbinden.

5. Verbrennungsmotor nach Anspruch 4, **dadurch gekennzeichnet, dass** der Beschleuniger ein Gaspedal (15) ist, das federbeaufschlagt in einer Leerlaufposition ist, und dass der Schalter (16) vorgesehen ist, um zu schalten, wenn das Gaspedal von einer niedergedrückten Position in eine Leerlaufposition bewegt wird.

6. Verbrennungsmotor nach Anspruch 1, **dadurch gekennzeichnet, dass** die Einrichtungen zum Erfassen der Motorbelastung einen Kraftstoffflussmesser (21) aufweisen, der angeordnet ist, um einer elektronischen Motorsteuereinheit (20) ein Signal bereitzustellen, welches den gegenwärtigen Kraftstoffverbrauch repräsentiert.

7. Verbrennungsmotor nach Anspruch 2, **dadurch gekennzeichnet, dass** die temperaturfühlenden Einrichtungen (17) angeordnet sind, um einer elektronischen Motorsteuereinheit (20) ein Signal bereitzustellen, welches die Motortemperatur repräsentiert.

## Revendications

1. Moteur à combustion interne suralimenté, comprenant un dispositif de frein moteur sur l'échappement, un turbocompresseur entraîné par l'échappement, un compresseur entraîné mécaniquement par le moteur, dont le côté de refoulement est connecté au côté d'aspiration du turbocompresseur, un embrayage disposé entre le moteur et le compresseur mécanique, et des moyens sensibles au régime du moteur qui permettent de maintenir l'embrayage enclenché dans une gamme de régime prédéterminée du moteur, les dits moyens (14, 20) sensibles au régime du moteur coopérant avec des moyens (15, 16 ; 21) qui détectent directement ou indirectement la charge du moteur (1) et qui bloquent l'enclenchement de l'embrayage (8) lorsque la charge du moteur est inférieure à une valeur prédéterminée, **caractérisé en ce que** des moyens (30) sont mis en oeuvre qui, lorsque le dispositif de frein moteur est actionné, permettent d'enclencher l'embrayage (8) sans tenir compte que les moyens de détection de charge (16, 21) indiquent que la charge est inférieure à ladite valeur prédéterminée.

2. Moteur à combustion interne selon la revendication 1, **caractérisé en ce que** les moyens (14, 20) sensibles au régime du moteur coopèrent avec des moyens (17) de détection de température qui permettent d'inhiber la fonction de blocage assurée par le moyen détecteur de charge (15, 16 ; 21) lorsque la température du moteur est inférieure à une valeur prédéterminée.

3. Moteur à combustion interne selon la revendication 2, **caractérisé en ce que** les moyens (14, 20) sensibles au régime du moteur sont adaptés, lorsque le régime du moteur est un régime quelconque compris entre zéro et un régime de moteur prédéterminé, pour maintenir l'embrayage désenclenché quelle que soit la température du moteur.

4. Moteur à combustion interne selon l'une des revendications 1 à 3, **caractérisé en ce que** les moyens de détection de charge et de blocage de l'enclenchement de l'embrayage (8) comprennent un accélérateur (15) et un commutateur (16) commandé par cet accélérateur dans un circuit d'un embrayage (8) à électroaimant, ledit commutateur étant adapté pour couper ou établir le courant dans le circuit en fonction d'un certain actionnement prédéterminé de l'accélérateur (15).

5. Moteur à combustion interne selon la revendication 4, **caractérisé en ce que** l'accélérateur est une pédale d'accélérateur (15) sollicitée par un ressort vers une position de ralenti, et **en ce que** le commutateur (16) est disposé de façon à commuter lorsque la pédale d'accélérateur se déplace d'une position enfoncée vers une position de ralenti.

6. Moteur à combustion interne selon la revendication 1, **caractérisé en ce que** les moyens de détection de la charge du moteur comprennent un débitmètre de carburant (21) qui est adapté pour fournir un signal représentant la consommation instantanée de carburant à un ensemble (20) de commande électronique du moteur.

7. Moteur à combustion interne selon la revendication 2, **caractérisé en ce que** les moyens de détection de température (17) sont adaptés pour fournir un signal représentant la température du moteur à un ensemble (20) de commande électronique du moteur.
